# EUROPÄISCHE PATENTSCHRIFT

(11) **EP 0 919 174 B1**
(45) Veröffentlichungstag und Bekanntmachung des Hinweises auf die Patenterteilung: **03.09.2003**
(21) Anmeldenummer: 97810895.9
(22) Anmeldetag: 21.11.1997
(51) Int. Cl.: A47J 39/00

(54) **Wagen zur Aufnahme von mehreren Tabletts mit Speisen**
Cart for containing several food trays
Chariot pour contenir des plateaux avec de la nourriture

(43) Veröffentlichungstag der Anmeldung: 02.06.1999
(73) Patentinhaber: Schmalz, E., Nachfolger Schmalz, Beat, 2560 Nidau (CH)
(72) Erfinder: Schmalz, Beat, 2560 Nidau (CH)
(74) Vertreter: BOVARD AG - Patentanwälte

(56) Entgegenhaltungen:
- EP-A- 0 203 883
- EP-A- 0 757 509
- WO-A-92/00018
- CH-A- 688 257
- FR-A- 2 209 285
- FR-A- 2 662 592
- GB-A- 2 066 441

## Beschreibung

Die vorliegende Erfindung bezieht sich auf einen Wagen zur Aufnahme von mehreren Tabletts, auf welchen jeweils warme und/oder kalte Speisen, die ein Menü bilden und die in Geschirrelementen untergebracht sind, angeordnet sind, gemäss dem Oberbegriff des Patentanspruchs 1.

Derartige Wagen werden insbesondere in Spitälern, Altersheimen oder dergleichen verwendet, in welchen die Menüs, bestehend aus warmen und kalten Speisen in einer zentralen Grossküche zubereitet und auf Tabletts angeordnet werden, welche dann zu den einzelnen Stationen gebracht und an die einzelnen Personen verteilt werden müssen. Derartige Menüs werden meistens einige Zeit vor der Abgabe an die entsprechenden Personen zubereitet. Die gekochten warmen Speisen werden dann innert kurzer Zeit auf unter 3° C abgekühlt. Diese gekühlten Menüs können dann bereits im entsprechenden Wagen aufbewahrt werden, wenn dieser Wagen beispielsweise in einem Kühlraum abgestellt werden kann. Kurz vor dem Verteilen der Menüs an die entsprechenden Personen wird der jeweilige Wagen auf der Station ans Stromnetz angeschlossen. Im Wagen sind Induktionsspulen derart angeordnet, dass die Teller oder Tassen, in welchen sich Speisen befinden, die erwärmt werden müssen, über diese Induktionsspulen zu liegen kommen. Die entsprechenden Teller oder Tassen sind mit einer leitfähigen Schicht versehen. Über die Induktionsspulen können nun die Speisen erwärmt werden. Hierbei sind die Teller bzw. Tassen mit Abdeckungen versehen, damit ein Wärmeübergang möglichst vermieden wird, und damit die kalten Speisen nicht erwärmt werden.

Während des Transports sollen die gekühlten Speisen nicht über 5° C erwärmt werden. Dieser Wert soll auch für die kalten Speisen eingehalten werden, wenn die warm zu servierenden Speisen erwärmt werden. Um dieses zu erreichen ist vorgeschlagen worden, einen Wagen mit Kältekörpern auszustatten, die einen übermässigen Temperaturanstieg vermeiden sollen, wie dies in der CH-PS 688 257 dargestellt ist. Es hat sich aber herausgestellt, dass insbesondere die Speisen, die auf Tabletts angeordnet sind, die relativ weit weg von diesen Kältekörpern sind, nur schwerlich auf einer Temperatur von maximal 5° C gehalten werden können.

Um die Kühleffizienz zu verbessern, sind entsprechende Geräte mit Ventilationsmitteln ausgestattet worden, mit welchen ein gekühlter Luftstrom zur Zirkulation gebracht wird, wie dies aus der FR-A-26 62 592 ersichtlich ist. Hierbei werden die Lüftungskanäle durch entsprechende Formgebungen und Öffnungen in den Tabletts und deren Abdeckungen gebildet. Nachteilig ist hierbei, dass die Tabletts und deren Abdeckungen eine relativ komplizierte Form haben, wodurch deren Herstellung verteuert wird. Ferner muss, damit die Luftzirkulation funktioniert, ein ununterbrochener Stapel vorliegen, wobei, wenn der Stapel den Behälter nicht vollständig füllt, flexible Wände vorzusehen sind. Dies führt zu einem komplizierten Aufbau.

Eine ähnliche Einrichtung zeigt auch die FR-A-22 09 285. Hier sind Abtrennwände erforderlich, um ein Zweikammersystem zu erhalten. Auch hier müssen die Tabletts entsprechend geformt sein.

Die Aufgabe der Erfindung besteht nun darin, derartige Wagen so zu gestalten, dass für den ganzen Innenraum des Wagens eine effiziente Kühlung der Speisen über längere Zeit möglich ist, und dass die kalt zu servierenden Speisen auch während des Aufwärmvorgangs der warm zu servierenden Speisen auf einer Temperatur gehalten werden können, die unter 5° C liegt.

Erfindungsgemäss erfolgt die Lösung dieser Aufgabe durch die im Anspruch 1 angegebene Merkmalskombination.

Mit derartigen Wagen ist es möglich, die kalten und vorportionierten Speisen, die auf den Tabletts angeordnet sind, lange Zeit vor der Verteilung dieser Speisen an die jeweiligen Personen auf die entsprechenden Stationen zu bringen, die Wagen ans Stromnetz anzuschliessen und die darin enthaltenen Speisen auf einer Temperatur von etwa 3° C zu halten. Vor dem Servieren können die zu erwärmenden Speisen über die Induktionsspulen erwärmt werden, die Kühleinrichtung bleibt weiterhin eingeschaltet, so dass die kalt zu servierenden Speisen auf einer Temperatur von unter 5° C gehalten werden können. Durch diese Möglichkeiten können die Arbeitsabläufe vereinfacht werden, die Mahlzeiten können in einwandfreiem Zustand serviert werden.

Durch die Umwälzung der Luft im abgeschlossenen kastenförmigen Aufbau des Wagens und indem diese Luft durch Wärmetauscher einer Verdichter-Kälteanlage, die im Wagen eingesetzt ist, leitbar ist, kann eine sehr effiziente Kühlung erreicht werden.

In vorteilhafter Weise ist im Bereich der Auslassöffnung, durch welche die Luft aus dem Innenraum des kastenförmigen Aufbaus abgesaugt wird, ein Temperaturfühler angeordnet, der mit der Steuer- und Regeleinrichtung verbunden ist. Dadurch lässt sich die Temperatur innerhalb des kastenförmigen Aufbaus des Wagens überwachen und regeln.

In vorteilhafter Weise sind die Auslassöffnungen in der Decke des kastenförmigen Aufbaus angebracht, wodurch der Ventilator und die Kühlelemente oberhalb des kastenförmigen Aufbaus im Kanalsystem untergebracht werden können.

Um zu vermeiden, dass bei der Reinigung des Innenraums des Wagens, was durch abspritzen erfolgt, Wasser in das Kanalsystem eindringen kann, ist in vorteilhafter Weise zwischen den Auslassöffnungen und dem darüber angeordneten Ventilator ein Spritzschutz eingesetzt. Dieser kann in einfacher Weise aus quer zur Strömungsrichtung der Luft und nebeneinander angeordneten Z-förmig gewinkelten Profilen aus Blech gebildet werden.

Eine weitere vorteilhafte Ausgestaltung der Erfindung besteht darin, dass der kastenförmige Aufbau aus Chromnickelstahl besteht, und dass dieser von einer Isolationsschicht umgeben ist. Der Chromnickelstahl wirkt als Speicher, so dass beim Verschieben des Wagens von einem Ort zum andern, bis er wieder an das elektrische Netz angeschlossen werden kann, im Innenraum des kastenförmigen Aufbaus kaum eine Temperaturerhöhung auftritt.

Eine weitere vorteilhafte Ausgestaltung des Wagens besteht darin, dass der kastenförmige Aufbau des Wagens von einem Gehäuse umgeben ist, so dass im Raum, der zwischen dem kastenförmigen Aufbau und dem Gehäuse gebildet wird, die erforderlichen Apparaturen zur Kühlung und zur Erwärmung der Speisen untergebracht werden können, wodurch insbesondere auch eine optimale ästhetisch Formgebung des Wagens erreicht werden kann.

Eine Ausführungsform des erfindungsgemässen Wagens wird nachfolgend anhand der beiliegenden Zeichnung beispielhaft näher erläutert.

Es zeigt:
Fig. 1 in schematischer Darstellung eine Ansicht von vorne auf den erfindungsgemässen Wagen, zum Teil im Schnitt, wobei die Türen weggelassen wurden;
Fig. 2 in schematischer Darstellung eine Ansicht von oben auf den Wagen mit dem im Schnitt dargestellten Kanalsystem;
Fig. 3 eine Schnittdarstellung entlang Linie III-III durch den erfindungsgemässen Wagen gemäss Fig. 1; und
Fig. 4 eine Schnittdarstellung des Wagens entlang Linie IV-IV gemäss Fig. 1.

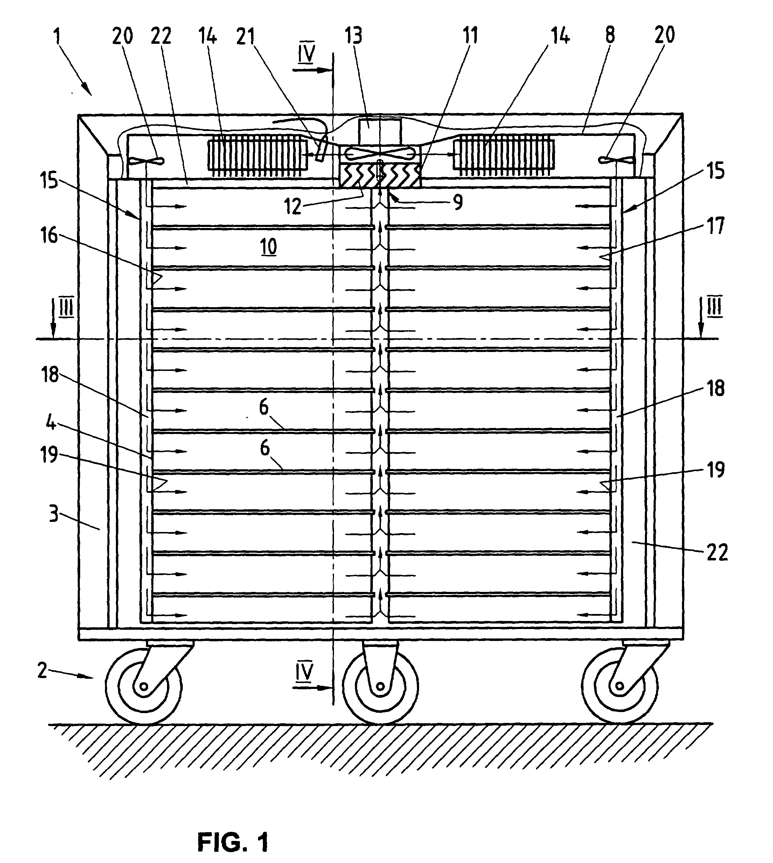

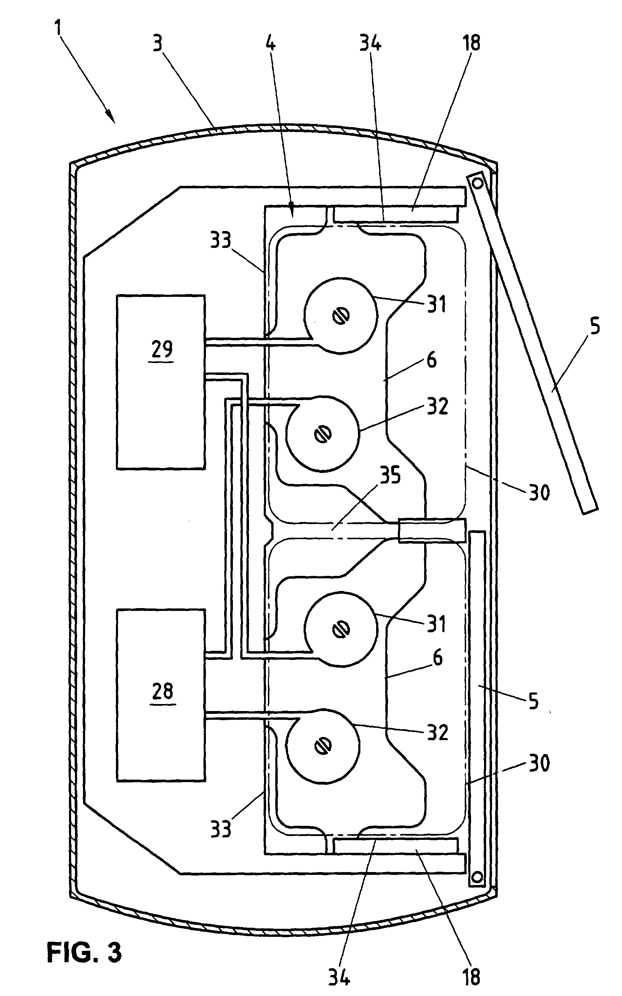

Der erfindungsgemässe Wagen 1, wie er in Fig. 1 dargestellt ist, umfasst ein Fahrgestell 2, auf welches ein Gehäuse 3 aufgesetzt ist. In dieses Gehäuse 3 ist der kastenförmige Aufbau 4 eingesetzt, welcher mit Türen 5 (Fig. 3) verschliessbar ist. In diesem kastenförmigen Aufbau 4 sind die Tabletts einschiebbar, auf welchen die warmen und/oder kalten Speisen angeordnet sind, wie später noch beschrieben wird. Die Tabletts kommen auf Auflagen 6 zu liegen, in welchen die Induktionsspulen untergebracht sind, wie ebenfalls später noch beschrieben wird.

Oberhalb der die Decke 7 bildende Wandung des kastenförmigen Aufbaus 4 ist ein Kanalsystem 8 angeordnet. Dieses Kanalsystem 8 ist über Auslassöffnungen 9 mit dem Innenraum 10 des kastenförmigen Aufbaus 4 verbunden. Die Auslassöffnungen 9 sind durch einen Spritzschutz 11 abgedeckt, welcher durch quer zur Strömungsrichtung der Luft und nebeneinander angeordneten Z-förmig gewinkelten Profilen 12 aus Blech gebildet ist. Mit diesem Spritzschutz 11 wird vermieden, dass beim Reinigen des Wagens, welches durch Abspritzen mit Wasser erfolgen kann, das Wasser in das Kanalsystem 8 eindringen kann.

Auf den Spritzschutz 11 aufgesetzt ist ein Ventilator 13, mit welchem die Luft aus dem Innenraum 10 des kastenförmigen Aufbaus abgesaugt und in das Kanalsystem 8 geleitet werden kann. Im Kanalsystem 8 sind Wärmetauscher 14 angeordnet, in welchen ein Kältemittel zirkuliert, wie nachfolgend noch beschrieben wird, und durch welche die Luft geleitet und entsprechend auf etwa - 6° C gekühlt wird. Diese gekühlte Luft wird in ein weiteres Kanalsystem 15 geführt, das aus zwei entlang der Seitenwände 16, 17 des kastenförmigen Aufbaus 4 verlaufenden Luftkanälen 18 besteht. Gegen den Innenraum 10 hin sind in diesen Luftkanälen 18 Zuführöffnungen 19 angebracht. Auf der Einströmseite dieser Luftkanäle 18 ist jeweils ein weiterer Ventilator 20 angeordnet.

Mit den Ventilatoren 13 und 20 erreicht man ein Absaugen der Luft aus dem Innenraum 10 des kastenförmigen Aufbaus 4, die dann durch die Wärmetauscher 14 auf die erforderliche Temperatur gekühlt wird, wonach diese über die Luftkanäle 18 und der darin angebrachten Zuführöffnungen 19 wieder in den Innenraum 10 des kastenförmigen Aufbaus geleitet wird. Durch die Anordnung der Zuführöffnungen 19 und der zentralen Auslassöffnungen 9 wird in optimaler Weise erreicht, dass alle in den Wagen 1 eingesetzten Tabletts durch die gekühlte Luft überströmt werden. Zur Regelung der Lufttemperatur ist im Bereich der Auslassöffnungen 9 ein Temperaturfühler 21 vorgesehen, der mit der Steuer- und Regeleinrichtung verbunden ist.

Der kastenförmige Aufbau 4 ist vollständig von einer Isolationsschicht 22 umgeben. Der kastenförmige Aufbau 4 ist aus Chromnickelstahl gefertigt, mit welchem eine Kältespeicherung erreicht werden kann, so dass der Innenraum 10 auch beim Verschieben des Wagens 1, wenn dieser nicht an das elektrische Netz angeschlossen ist, über längere Zeit auf der erforderlichen tiefen Temperatur gehalten werden kann.

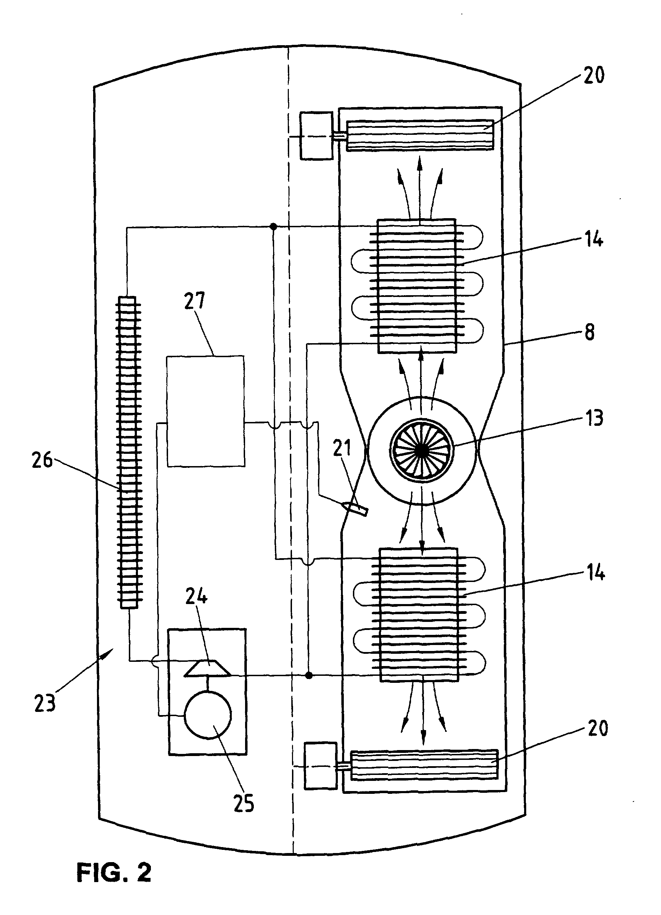

In Fig. 2 ist das Kanalsystem 8 ersichtlich, in welchem der Ventilator 13 und die weiteren Ventilatoren 20 angeordnet sind. Zwischen den Ventilator 13 und den weiteren Ventilatoren 20 ist jeweils ein Wärmetauscher 14 angeordnet. Diese Wärmetauscher 14 sind Bestandteil einer bekannten Verdichterkälteanlage 23. In dieser Verdichterkälteanlage 23 zirkuliert ein Kältemittel, welches im Verdichter 24, der durch einen Elektromotor 25 angetrieben ist, verdichtet wird. Das Kältemittel durchläuft einen weiteren Wärmetauscher 26, in welchem die durch die Verdichtung entstandene Wärme an die Umgebung abgegeben wird. Hierzu sind im Boden des Wagens 1 nicht dargestellte Lüftungsschlitze angebracht, wodurch eine Strahlreinigung mit Wasser des Wagens möglich ist. Nach dem Durchlauf des weiteren Wärmetauschers 26 gelangt das Kältemittel in die Wärmetauscher 14, in welchen es verdampft, wodurch die durch die Wärmetauscher 14 geleitete Luft gekühlt wird.

Die Temperatur der aus dem Innenraum 10 (Fig. 1) durch den Ventilator 13 abgesaugte Luft wird durch den Temperaturfühler 21 gemessen. Das Signal wird einer zentralen Steuer- und Regeleinrichtung 27 zugeleitet, welche das Ein- und Ausschalten der Verdichterkälteanlage in Abhängigkeit der Temperatur der Luft im Innenraum in bekannter Weise steuert.

In Fig. 3 ist das Gehäuse 3 des Wagens 1 ersichtlich, in welchem der kastenförmige Aufbau 4 eingesetzt ist. Im Raum 27 zwischen dem kastenförmigen Aufbau 4 und dem Gehäuse 3 ist die Verdichterkälteanlage 23, die Steuer- und Regeleinrichtung 27 (Fig. 2) und die Generatoren 28, 29 untergebracht.

Im kastenförmigen Aufbau 4 sind, wie auch aus Fig. 1 ersichtlich ist, die Auflagen 6 angeordnet. Pro Ebene sind zwei Auflagen 6 nebeneinander angeordnet, so dass in den Wagen 1 zwei Stapel von Tabletts 30 eingesetzt werden können. Diese Tabletts 30 sind in Fig. 3 strichpunktiert dargestellt. In jeder Auflage 6 sind in bekannter Weise jeweils zwei Induktionsspulen 31 und 32 angeordnet. Die Induktionsspulen 31 sind mit dem Generator 29 verbunden, während die Induktionsspulen 32 mit dem Generator 28 verbunden sind. Die Menüs können auf den Tabletts 30 so angeordnet werden, dass beispielsweise der Teller mit den warm zu servierenden Speisen über die Induktionsspulen 31 zu stehen kommt, während beispielsweise der Behälter mit der Suppe über die Induktionsspulen 32 zu stehen kommt. Die erforderliche Energiezufuhr kann somit für Speise und Suppe unabhängig voneinander in bekannter Weise gesteuert und geregelt werden. Im vorderen Bereich der Tabletts 30 können dann die kalt zu servierenden Speisen angeordnet werden, wie Salat und Dessert.

Wie aus Fig. 3 ersichtlich ist, kommt jedes Tablett 30 im in den kastenförmigen Aufbau 4 eingesetzten Zustand praktisch an der hinteren Wand 33 und an einer Seitenwand 34 sowie an der geschlossenen Tür 5 zur Anlage. Die Seitenwand 34 wird mindestens teilweise durch den Luftkanal 18 gebildet. Zwischen jeweils zwei nebeneinander liegenden Tabletts 30 besteht ein freier Zwischenraum, so dass zwischen den beiden Stapeln von Tabletts 30 ein Durchgang 35 für die Luft gebildet wird. Dadurch wird gewährleistet, dass die durch die Zuführöffnungen, die im Luftkanal 18 angeordnet sind, einströmende Luft über jedes Tablett 30 hinweg streicht und zum Durchgang 35 gelangt, durch welchen die Luft, angesaugt durch den Ventilator 13 (Fig. 1) abströmt. Damit wird in optimaler Weise beide Stapel von Tabletts 30 im Wagen 1 gleichmässig gekühlt.

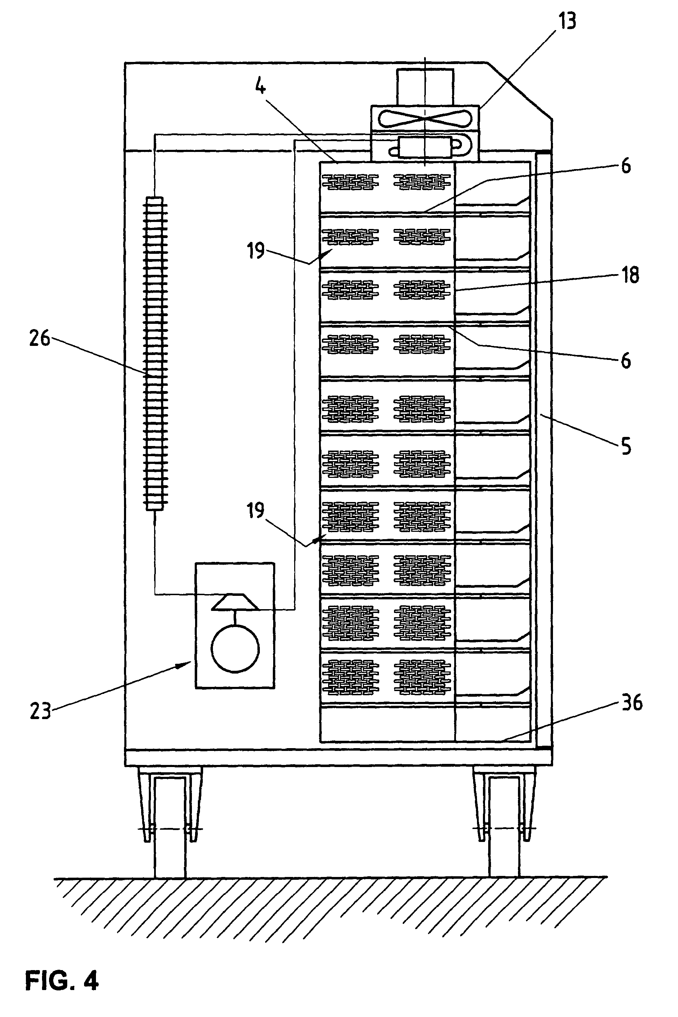

Wie in Fig. 4 dargestellt ist, sind die Zuführöffnungen 19 im Luftkanal 18, durch welchen jeweils die Seitenwand 16, 17 des kastenförmigen Aufbaus 4 gebildet wird, so ausgestaltet, dass die jeweilige Durchströmungsquerschnittfläche der Zuführöffnungen 19, die jeweils zwischen zwei Tabletts liegen, von der obenliegenden Einströmseite her gegen den Boden 36 des kastenförmigen Aufbaus 4 hin zunimmt. Damit ist gewährleistet, dass auch die untersten Tabletts im kastenförmigen Aufbau 4, die am weitesten weg von den Ventilatoren angeordnet sind, in optimaler Weise mit kühler Luft versorgt werden.

Mit diesem erfindungsgemässen Wagen können somit auf Tabletts angeordnete Menüs, die warm und/oder kalt zu servierende Speisen umfassen, über längere Zeit gekühlt aufbewahrt werden, wobei der Wagen an einem beliebigen Standort lediglich ans Stromnetz angeschlossen werden muss. Kurz vor dem Servieren der Menüs können dann über die Induktionsspulen die warm zu servierenden Speisen regeneriert und auf eine Temperatur von etwa 70° C erwärmt werden, während welchem Vorgang die Kühlung der kühl zu servierenden Speisen weiterhin in Betrieb ist, so dass deren Temperatur nicht über 5° C ansteigt. Somit stehen diesem Wagen die vielfältigsten Anwendungsmöglichkeiten offen.

Der Wagen steht unmittelbar nach dem Verteilen der Speisen für die Wiederverwendung zur Verfügung, da er nicht erwärmt wird.

## Patentansprüche

1. Wagen (1) zur Aufnahme von mehreren Tabletts (30), auf welchen jeweils warme und/oder kalte Speisen, die ein Menü bilden und die in Geschirrelementen untergebracht sind, angeordnet sind, welche Tabletts (30) in Auflagen (6) eines kastenförmigen, mit Türen (5) verschliessbaren Aufbaus (4) des Wagens (1) einschiebbar sind, welche Auflagen (6) mit Induktionsspulen (31, 32) ausgestattet sind, die von mindestens einem Generator (28, 29), gesteuert durch eine Steuer- und Regeleinrichtung (27), gespiesen sind, mit welchen Induktionsspulen (31, 32) die mit einer leitfähigen Schicht versehenen Geschirrelemente, in welchen die warm zu servierenden Speisen enthalten sind und die mit einer wärmeisolierenden Abdeckung zugedeckt sind, zusammenwirken und die warm zu servierenden Speisen vor dem Servieren erwärmbar sind, und der Innenraum (10) des kastenförmigen Aufbaus (4) mit einer im Wagen untergebrachten Kühleinrichtung (23) kühlbar ist, indem die Luft im kastenförmigen Aufbau (4) durch einen Ventilator (13) über Auslassöffnungen (9) aus dem kastenförmigen Aufbau (4) absaugbar, über ein Kanalsystem (8) durch Kühlelemente (14) der Kühleinrichtung (23) leitbar und kühlbar ist und über ein weiteres Kanalsystem (15), das durch Luftkanäle (18) gebildet ist, in den kastenförmigen Aufbau (4) rückführbar ist, **dadurch gekennzeichnet, dass** in den kastenförmigen Aufbau (4) die Tabletts (30) derart einschiebbar sind, dass diese zwei nebeneinander angeordnete Stapel bilden, und jedes Tablett (30) jeweils an der hinteren Wand (33) und einer Seitenwand (34) sowie an der geschlossenen Türe (5) praktisch zur Anlage kommt und zwischen jeweils zwei nebeneinander liegenden Tabletts (30) ein freier Zwischenraum besteht, so dass zwischen den beiden Stapeln von Tabletts (30) ein Durchgang (35) für die Luft entsteht, dass die Luftkanäle (18) jeweils in die beiden Seitenwände (34) des kastenförmigen Aufbaus (4) integriert sind und im wesentlichen senkrecht von der Decke (7) des kastenförmigen Aufbaus (4) bis zum Boden (36) verlaufen und Zuführöffnungen (19) in der dem Innenraum (10) zugewandten Wandung des jeweiligen Luftkanal (18) so angeordnet sind, dass sie jeweils zwischen zwei in den kastenförmigen Aufbau (4) eingesetzten Tabletts (30) zu liegen kommen, und dass die jeweilige Durchströmquerschnittfläche der Zuführöffnungen (19), die jeweils zwischen zwei Tabletts (30) liegen, von der obenliegenden Einströmseite her gegen den Boden (36) des kastenförmigen Aufbaus (4) hin zunimmt.

2. Wagen nach Anspruch 1 **dadurch gekennzeichnet, dass** die Kühleinrichtung eine Verdichter-Kälteanlage (23) ist und dass jedes Kühlelement als Wärmetauscher (14) ausgebildet ist, durch welchen einerseits ein Kältemittel der Verdichter-Kälteanlage (23) fliesst und andererseits die Luft leitbar ist.

3. Wagen nach Anspruch 1 oder 2, **dadurch gekennzeichnet, dass** im Bereich der Auslassöffnungen (9) mindestens ein Temperaturfühler (21) angeordnet ist, der mit der Steuer- und Regeleinrichtung (27) verbunden ist.

4. Wagen nach einem der Ansprüche 1 bis 3, **dadurch gekennzeichnet, dass** die Auslassöffnungen (9) in einer die Decke (7) bildende Wandung des kastenförmigen Aufbaus (4) vorgesehen sind, dass der mindestens eine Ventilator (13) hinter den Auslassöffnungen (9) angeordnet ist und dass das mindestens eine Kühlelement (14) oberhalb des kastenförmigen Aufbaus (4) im Kanalsystem (8) angeordnet ist.

5. Wagen nach Anspruch 4, **dadurch gekennzeichnet, dass** zwischen den Auslassöffnungen (9) und dem darüber angeordneten Ventilator (13) ein Spritzschutz (11) eingesetzt ist, welcher durch quer zur Strömungsrichtung der Luft und nebeneinander angeordneten Z-förmig gewinkelten Profilen (12) aus Blech gebildet ist.

6. Wagen nach einem der Ansprüche 1 bis 5, **dadurch gekennzeichnet, dass** auf der Einströmseite der Luftkanäle (18) jeweils ein weiterer Ventilator (20) angebracht ist.

7. Wagen nach einem der Ansprüche 1 bis 6, **dadurch gekennzeichnet, dass** die Auslassöffnungen (9) zentral über dem Durchgang (35) für die Luft in der Decke (7) des kastenförmigen Aufbaus (4) angeordnet sind, und dass zwischen den Auslassöffnungen (9) und jedem Luftkanal (18) im Kanalsystem (8) jeweils ein Wärmetauscher (14) angeordnet ist.

8. Wagen nach einem der Ansprüche 1 bis 7, **dadurch gekennzeichnet, dass** der kastenförmige Aufbau (4) aus Chromnickelstahl besteht, und dass dieser von einer Isolationsschicht (22) umgeben ist.

9. Wagen nach einem der Ansprüche 1 bis 8, **dadurch gekennzeichnet, dass** der kastenförmige Aufbau (4) des Wagens (1) von einem Gehäuse (3) umgeben ist und dass die Kühleinrichtung (23), die Generatoren (28, 29) und die Steuer- und Regeleinrichtung (27) innerhalb dieses Gehäuses (3) untergebracht sind.

## Claims

1. Cart (1) for containing a plurality of trays (30) on each of which is disposed warm and/or cold food forming a menu and accommodated in dish elements, which trays (30) are able to be pushed into supports (6) of a box-shaped construction (4), closable with doors (5), of the cart (1), which supports (6) are provided with induction coils (31, 32), which are fed by at least one generator (28, 29) controlled by a controlling and regulating device (27), with which induction coils (31, 32) the dish elements, provided with a conductive coating, co-operate, in which dish elements the food to be served warm is contained and which are covered with a heat-insulating cover, and in which the food to be served warm is able to be warmed up before serving, and the inner space (10) of the box-shaped construction (4) is able to be cooled with a cooling device (23) accommodated in the cart in that the air in the box-shaped construction (4) is able to be suctioned by a fan (13), via outlet apertures (9), out of the box-shaped construction (4), is able to be guided and cooled by cooling elements (14) of the cooling device (23) via a duct system (8) and is able to be led back into the box-shaped construction (4) via a further duct system (15) formed by air ducts (18), **characterised in that** the trays (30) are able to be pushed into the box-shaped construction (4) in such a way that these form two stacks disposed next to one another, and each tray (30) comes practically to abut in each case the rear wall (33) and a side wall (34) as well as the dosed door (5), and between each two trays (30) situated next to one another there is an empty interim space such that between the two stacks of trays (30) a passage (35) is created for the air, **in that** the air ducts (18) are each integrated into the two side walls (34) of the box-shaped construction (4) and run substantially perpendicular from the ceiling (7) of the box-shaped construction (4) to the floor (36), and supply apertures (19) are disposed in the walling, turned toward the inner space (10), of the respective air duct (18) such that they come to be situated in each case between two trays (30) inserted in the box-shaped construction (4), and **in that** the respective flow-through cross-sectional area of the supply apertures (19), which are situated in each case between two trays (30), increases from the above-situated admission side toward the floor (36) of the box-shaped construction (4).

2. Cart according to claim 1, **characterised in that** the cooling device is a compressor refrigerating system (23) and **in that** each cooling element is designed as a heat exchanger (14) through which, on the one hand, a cooling agent of the compressor refrigerating system (23) flows, and, on the other hand, the air is conductible.

3. Cart according to claim 1 or 2, **characterised in that** disposed in the region of the outlet apertures (9) is at least one temperature sensor (21) which is connected to the controlling and regulating device (27).

4. Cart according to one of the claims 1 to 3, **characterised in that** the outlet apertures (9) are provided in a walling forming the ceiling (7) of the box-shaped construction (4), **in that** the at least one fan (13) is disposed behind the outlet apertures (9), and **in that** the at least one cooling element (14) is disposed in the duct system (8) above the box-shaped construction (4).

5. Cart according to claim 4, **characterised in that** inserted between the outlet apertures (9) and the fan (13) disposed above is a splash guard (11), which is formed by sections (12) of sheet metal, bent Z-shaped, disposed crosswise to the direction of flow of the air and next to one another.

6. Cart according to one of the claims 1 to 5, **characterised in that** a further fan (20) is installed in each case on the admission side of the air ducts (18).

7. Cart according to one of the claims 1 to 6, **characterised in that** the outlet apertures (9) are disposed in the ceiling (7) of the box-shaped construction (4) centrally over the passage (35) for the air, and **in that** disposed in each case between the outlet apertures (9) and each air duct (18) in the duct system (8) is a heat exchanger (14).

8. Cart according to one of the claims 1 to 7, **characterised in that** the box-shaped construction (4) consists of nickel chromium steel, and **in that** this is surrounded by an insulation layer (22).

9. Cart according to one of the claims 1 to 8, **characterised in that** the box-shaped construction (4) of the cart (1) is surrounded by a housing (3) and **in that** the cooling device (23), the generators (28, 29) and the controlling and regulating device (27) are accommodated inside this housing (3).

## Revendications

1. Chariot (1) pour contenir plusieurs plateaux (30) sur lesquels sont disposés des plats chauds ou froids qui forment un menu et qui sont mis dans des éléments de vaisselle, plateaux (30) qui peuvent être introduits dans des supports (6) d'une structure (4) pouvant être fermée avec des portes (5), en forme de caisson, du chariot 1, supports (6) qui sont munis de bobines à induction (31, 32) qui sont alimentées par au moins un générateur (28, 29) commandé par un dispositif de réglage et de commande (27), bobines à induction (31, 32) avec lesquelles coopèrent les éléments de vaisselle munis d'une couche conductrice, dans lesquels sont contenus les plats à servir chaud et qui sont recouverts d'un couvercle thermo-isolant et les plats à servir chaud peuvent être réchauffés avant le service et l'intérieur (10) de la structure en caisson (4) peut être refroidi par un dispositif de refroidissement (23) logé dans le chariot dans le fait que l'air peut être aspiré dans la structure en caisson (4) par un ventilateur (13) par des orifices de sortie (9) hors de la structure en caisson (4), qui peut être guidé et refroidi par un système de canaux (8) à travers des éléments de refroidissement (14) du dispositif de refroidissement (23) et peut être remis en circulation par un autre système de canaux (15) constitués par des canaux d'air (18), dans la structure en forme de caisson (4), **caractérisé en ce que** les plateaux (30) sont insérables dans la structure en caisson (4) de manière à former deux piles disposées l'une à côté de l'autre et chaque plateau (30) vient pratiquement en butée respectivement contre la paroi arrière (33) et une paroi latérale (34) ainsi que contre les portes fermées (5) et qu'entre deux plateaux (30) se trouvant juste à côté, il existe un espace libre, de sorte que cela forme entre les deux piles de plateaux (30) un passage (35) pour l'air, **en ce que** les canaux d'air (18) sont intégrés respectivement dans les deux parois latérales (34) de la structure en caisson (4) et s'étendent sensiblement perpendiculairement depuis le haut (7) de la structure en caisson (4) jusqu'au fond (36) et **en ce que** des ouvertures d'amenée (19) sont disposées dans la paroi du canal d'air respectif (18), tournée vers l'intérieur (10), de sorte qu'elles viennent s'appliquer respectivement entre deux plateaux (30) insérés dans la structure en caisson (4) et **en ce que** la surface de section transversale d'écoulement respective des ouvertures d'amenée (19), qui se trouvent respectivement entre deux plateaux (30), augmente depuis la face d'arrivée située en haut en direction du fond (36) de la structure en caisson (4).

2. Chariot selon la revendication 1, **caractérisé en ce que** le dispositif de refroidissement est une installation frigorifique à compresseur (23) et **en ce que** chaque élément frigorifique est réalisé comme un échangeur thermique (14) à travers lequel s'écoule d'une part un réfrigérant de l'installation frigorifique à compresseur (23) et d'autre part à travers lequel l'air peut être guidé.

3. Chariot selon la revendication 1 ou 2, **caractérisé en ce que** dans la zone des ouvertures de sortie (9) il est disposé au moins une sonde de température (21) qui est reliée au dispositif de commande et de réglage (27).

4. Chariot selon l'une des revendications 1 à 3, **caractérisé en ce que** les ouvertures de sortie (9) sont prévues dans une paroi formant le haut (7) de la structure en caisson (4), **en ce qu'**au moins l'un des ventilateurs (13) est disposé derrière les ouvertures de sortie (9) et **en ce qu'**au moins l'un des éléments réfrigérants (14) est disposé au-dessus de la structure en caisson (4) dans le système de canaux (8).

5. Chariot selon la revendication 4, **caractérisé en ce qu'**entre les ouvertures de sortie (9) et le ventilateur placé au-dessus (13), il est placé une protection anti-projection (11) qui est constituée par des profilés (12) en tôle pliés en forme de Z et disposés les uns à côté des autres transversalement au sens d'écoulement de l'air.

6. Chariot selon l'une des revendications 1 à 5, **caractérisé en ce qu'**un autre ventilateur (20) est placé respectivement sur le côté arrivée des canaux d'air (18).

7. Chariot selon l'une des revendications 1 à 6, **caractérisé en ce que** les ouvertures de sortie (9) sont disposées centralement au-dessus du passage (35) pour l'air dans le haut (7) de la structure en forme de caisson (4) et **en ce qu'**un échangeur thermique (14) est disposé respectivement entre les ouvertures de sortie (9) et chaque canal d'air (18) dans le système de canaux (8).

8. Chariot selon l'une des revendications 1 à 7, **caractérisé en ce que** la structure en forme de caisson (4) est composée d'acier de nickel de chrome et **en ce que** celui-ci est entouré d'une couche isolante (22).

9. Chariot selon l'une des revendications 1 à 7, **caractérisé en ce que** la structure en forme de caisson (4) du chariot (1) est entourée d'un habillage (3) et **en ce que** le dispositif de refroidissement (23), les générateurs (28, 29) et le dispositif de commande et de réglage (27) sont logés dans cet habillage (3).
